# FASCICULE DE BREVET EUROPEEN

(11) **EP 3 222 367 B1**
(45) Date de publication et mention de la délivrance du brevet: **21.11.2018**
(21) Numéro de dépôt: 17159848.5
(22) Date de dépôt: 08.03.2017
(51) Int. Cl.: B09B 3/00, B09B 5/00, B23D 1/04, B27C 1/00, B28B 17/00, B32B 38/10, B32B 43/00, B29C 63/00, B24B 27/06, B26F 3/00

(54) **PROCÉDÉ ET INSTALLATION DE TRAITEMENT DE PANNEAU OU PLAQUE**
VERFAHREN UND VORRICHTUNG ZUR BEHANDLUNG VON PLATTEN
METHOD AND APPARATUS FOR PROCESSING OF BOARDS OR PANELS

(30) Priorité: 21.03.2016 FR 1652370
(43) Date de publication de la demande: 27.09.2017
(73) Titulaire: MECANOKIT, 85170 Le Poire-sur-Vie (FR)
(72) Inventeur: CORNU, Freddy, 85190 Beaulieu sous la Roche (FR)
(74) Mandataire: Godineau, Valérie

(56) Documents cités:
- EP-A1- 0 031 797
- WO-A1-92/00152
- NL-A- 9 200 245
- US-A1- 2007 184 743

## Description

### DOMAINE DE L'INVENTION

L'invention concerne un procédé et une installation de traitement de panneau, ou plaque, formé d'une âme et d'un premier et d'un deuxième parements prenant en sandwich l'âme.

### ART ANTÉRIEUR

Les panneaux formés d'une âme prise en sandwich entre un premier et un deuxième parements sont très largement utilisés dans la construction, notamment sous la forme de plaques de plâtre encore appelés Placoplatre (marque déposée). L'âme du panneau est donc une plaque de plâtre et les parements sont formés chacun d'un flan de carton ou de papier.

Chaque construction réalisée avec de tels panneaux amène à la création d'un grand nombre de déchets ou chutes desdits panneaux, qu'il est nécessaire de recycler. Pour un recyclage efficace permettant une réutilisation optimale, notamment du plâtre, il est nécessaire de séparer au mieux le plâtre constitutif de l'âme, du papier ou carton constitutif des parements. Jusqu'à présent, les solutions envisagées ne donnent pas satisfaction, car une telle séparation n'est pas effectuée ou effectuée dans de mauvaises conditions comme décrit dans la demande internationale WO 92/00152.

### BUT ET RÉSUMÉ

Un but de l'invention est donc de proposer un procédé et une installation de traitement dont les conceptions permettent une réutilisation ultérieure aisée des composants issus des traitements.

Un autre but de l'invention est de proposer un procédé et une installation dont les conceptions permettent une séparation efficace, à moindre coût et en un temps court des parements de l'âme du panneau.

À cet effet, l'invention a pour objet un procédé de traitement de panneau, ou plaque, formé d'une âme et d'un premier et d'un deuxième parements prenant en sandwich l'âme, caractérisé en ce qu'il comprend une étape de séparation au moins du premier parement du reste du panneau par contact d'appui d'au moins un organe rotatif de coupe avec le panneau, côté deuxième parement dudit panneau, en vue d'un rabotage dudit panneau, et en ce que l'étape de séparation est suivie en parallèle d'une part, d'une étape de tri par criblage des copeaux issus de l'action de l'organe rotatif de coupe pour séparer les copeaux les plus gros aptes à contenir du deuxième parement du reste des copeaux et d'autre part, d'une étape de collecte du premier parement.

Grâce au traitement du panneau par rabotage, il est aisé d'éliminer le deuxième parement et l'essentiel de l'âme en les réduisant en copeaux pour ne conserver que le premier parement, qui peut ainsi être récupéré aisément. Le rabotage permet donc de réduire en copeaux le deuxième parement et l'âme du panneau, tandis que le premier parement épargné pour l'essentiel par le rabotage tend généralement à s'enrouler sur lui-même. Les copeaux issus du rabotage peuvent être triés par criblage, pour permettre d'isoler les plus gros copeaux, qui sont susceptibles de contenir le deuxième parement. Ainsi, les premier et deuxième parements peuvent être séparés de l'âme, qui peut être réutilisée, notamment comme dessiccateur dans les champs.

Il doit être noté que par criblage, on entend toute technique de tri apte à permettre un tri basé sur la dimension des composants à trier, le terme criblage peut donc être considéré comme équivalent de tamisage ou plus généralement, de tri dimensionnel.

L'invention a encore pour objet une installation de traitement de panneau, ou plaque, formé d'une âme et d'un premier et d'un deuxième parements prenant en sandwich l'âme, caractérisée en ce qu'elle comprend, disposés au moins partiellement sur un bâti support, une raboteuse, un dispositif de tri, et une zone de collecte, ladite raboteuse comprenant un organe de coupe rotatif et un chemin de guidage du panneau à raboter muni d'une entrée d'alimentation en panneau et d'une sortie d'évacuation pour l'amenée dudit panneau à raboter reposant par son premier parement sur la surface de réception de panneau du chemin de guidage dans la zone active de coupe de l'organe de coupe rotatif en vue d'un rabotage du panneau à partir du deuxième parement du panneau, la zone de collecte étant disposée au moins partiellement sous et à l'aplomb de la sortie d'évacuation du chemin de guidage en vue de la collecte du premier parement, tandis que le dispositif de tri est disposé au moins partiellement à l'aplomb et sous l'organe de coupe rotatif, en aval de la sortie d'évacuation du chemin de guidage pris dans le sens de circulation du panneau le long du chemin de guidage depuis l'entrée d'alimentation en panneau en direction de la sortie d'évacuation, ce dispositif de tri comprenant au moins un crible de réception des copeaux issus du rabotage. Une telle installation permet notamment la mise en oeuvre du procédé tel que décrit ci-dessus.

La mise en oeuvre d'un rabotage au cours duquel le premier parement est séparé de l'âme permet une récupération ultérieure aisée du premier parement.

L'utilisation d'un crible apte à permettre la séparation des copeaux les plus gros issus du rabotage, c'est-à-dire les plus susceptibles de contenir du deuxième parement permet une séparation rapide et aisée du deuxième parement de l'âme.

Selon un mode de réalisation, l'épaisseur du panneau à raboter étant prédéterminée connue, le chemin de guidage et l'organe de coupe rotatif sont configurés pour permettre au moins un rabotage du panneau sur une épaisseur égale à l'épaisseur du panneau moins l'épaisseur du premier parement à plus ou moins 5 mm près. Plus le rabotage tend à ne laisser que le premier parement intact, plus le rendement du recyclage est élevé.

Selon un mode de réalisation, l'installation comprend des moyens d'entrainement en déplacement du panneau le long du chemin de guidage depuis l'entrée d'alimentation en panneau en direction de la sortie d'évacuation dudit chemin de guidage suivant une direction transversale à l'axe de rotation de l'organe de coupe rotatif. Ces moyens d'entraînement permettent de tenir une cadence élevée.

Selon un mode de réalisation, les moyens d'entrainement en déplacement du panneau le long du chemin de guidage comprennent un organe de transmission sans fin positionnable en regard de la surface de réception de panneau du chemin de guidage et des moyens de pressage dudit organe de transmission sans fin en direction de ladite surface de réception de panneau du chemin de guidage pour une prise en sandwich de chaque panneau entre l'organe de transmission sans fin et la surface de réception de panneau dudit chemin de guidage, ledit organe de transmission sans fin, tel qu'une chaine ou une courroie, suivant une trajectoire en boucle autour d'un axe sensiblement parallèle à l'axe de rotation de l'organe de coupe rotatif.

Selon un mode de réalisation, l'organe de transmission sans fin est muni, sur sa surface périphérique externe, d'éléments en saillie, tels que des picots ou dents, aptes à venir en prise avec le deuxième parement du panneau. Il en résulte une plus grande efficacité de l'entraînement des panneaux, sans risque de glissement.

Selon un mode de réalisation, la surface de réception de panneau du chemin de guidage s'étend dans un plan parallèle à l'axe de rotation de l'organe rotatif de coupe.

Selon un mode de réalisation, l'installation comprend, en aval de la sortie d'évacuation du chemin de guidage, pris dans le sens de circulation du panneau le long du chemin de guidage depuis l'entrée d'alimentation en panneau en direction de la sortie d'évacuation, une plaque déflectrice de guidage des copeaux en direction du dispositif de tri. Cette plaque déflectrice évite la chute gravitaire de copeaux dans la zone de collecte du premier parement.

Selon un mode de réalisation, l'organe de coupe rotatif est monté sur le bâti support réglable en hauteur et suivant une direction transversale à l'axe de rotation de l'organe de coupe rotatif dans le sens d'un rapprochement ou d'un écartement de l'entrée d'alimentation en panneau du chemin de guidage. Ces possibilités de réglage permettent d'affiner la qualité du rabotage.

Selon un mode de réalisation, le crible est un crible vibrant.

Selon un mode de réalisation, le crible dit autonettoyant présente une surface de criblage inclinée.

Selon un mode de réalisation, le crible du dispositif de tri présente une surface de criblage qui se prolonge en direction d'une zone s'étendant au moins partiellement sous, et à l'aplomb, du chemin de guidage, pour former au moins une partie de la zone de collecte du premier parement.

Ainsi, le dispositif de tri et la zone de collecte peuvent être formées à l'aide de parties de surface de criblage d'un même crible. Il en résulte une simplification de l'installation.

Selon un autre mode de réalisation, la surface de criblage du crible est surmontée d'une trémie disposée entre l'organe de coupe rotatif et la surface de criblage.

### BRÈVE DESCRIPTION DES DESSINS

L'invention sera bien comprise à la lecture de la description suivante d'exemples de réalisation, en référence aux dessins annexés dans lesquels :
- La figure 1 représente une vue en coupe d'une installation de traitement conforme à l'invention.
- La figure 2 représente une vue en perspective d'une installation conforme à l'invention, une partie du carter de l'installation ayant été omise pour mieux visualiser l'intérieur de l'installation.
- La figure 3 représente une vue en coupe agrandie d'un détail de la figure 1.
- La figure 4 représente une vue en perspective d'un organe de coupe rotatif.
- La figure 5 représente une vue en perspective d'une partie de l'organe de coupe rotatif de la figure 4.
- La figure 6 représente une vue en coupe d'un autre mode de réalisation d'une installation de traitement conforme à l'invention.

### DESCRIPTION DÉTAILLÉE

Comme mentionné ci-dessus, l'invention est plus particulièrement destinée à permettre le traitement de déchets ou chutes de panneaux formés d'une âme 21, se présentant sous forme d'une plaque de plâtre, cette âme étant prise en sandwich entre un premier parement 22 et un deuxième parement 23 formés chacun d'une feuille de carton ou de papier solidarisée à l'âme 21, l'ensemble formant un panneau de type Placoplatre (marque déposée).

Le traitement d'un tel panneau a pour but de séparer au mieux les parements de l'âme, pour permettre notamment une réutilisation de l'âme 21.

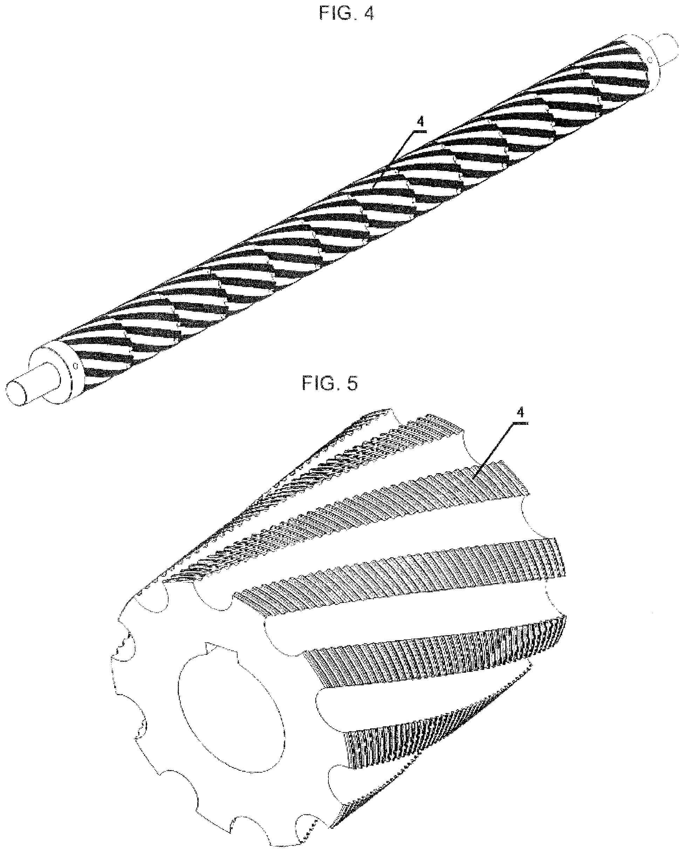

Le traitement consiste donc à séparer le premier parement 22 du reste du panneau 20 par rabotage. Ce rabotage s'opère par contact d'appui d'un organe 4 rotatif de coupe, tel qu'une fraise du type de celle illustrée aux figures 4 et 5, avec le panneau 20, côté deuxième parement 23 dudit panneau 20. Idéalement, le rabotage du panneau s'opère sur une épaisseur égale à l'épaisseur du panneau moins l'épaisseur du premier parement 22 à plus ou moins 5 mm près, pour ne conserver que le premier parement 22 intact après rabotage.

Ce premier parement 22, une fois exempt des moyens de rigidification constitués par l'âme, devient souple et tend à s'enrouler sur lui-même.

Le deuxième parement et l'âme forment, à l'issue du rabotage, des copeaux qu'il convient de trier pour séparer au mieux les copeaux formés par le deuxième parement, des copeaux formés par l'âme.

Généralement, les copeaux formés par le deuxième parement sont plus gros que les copeaux formés par l'âme, de sorte qu'un criblage qui réalise un tri en fonction de la dimension des composants est approprié.

Ces copeaux, formés par le deuxième parement, tendent à rester à la surface du crible, tandis que les copeaux formés par l'âme tendent à traverser la surface de criblage. En parallèle de cette étape de tri par criblage, le premier parement 22 est collecté.

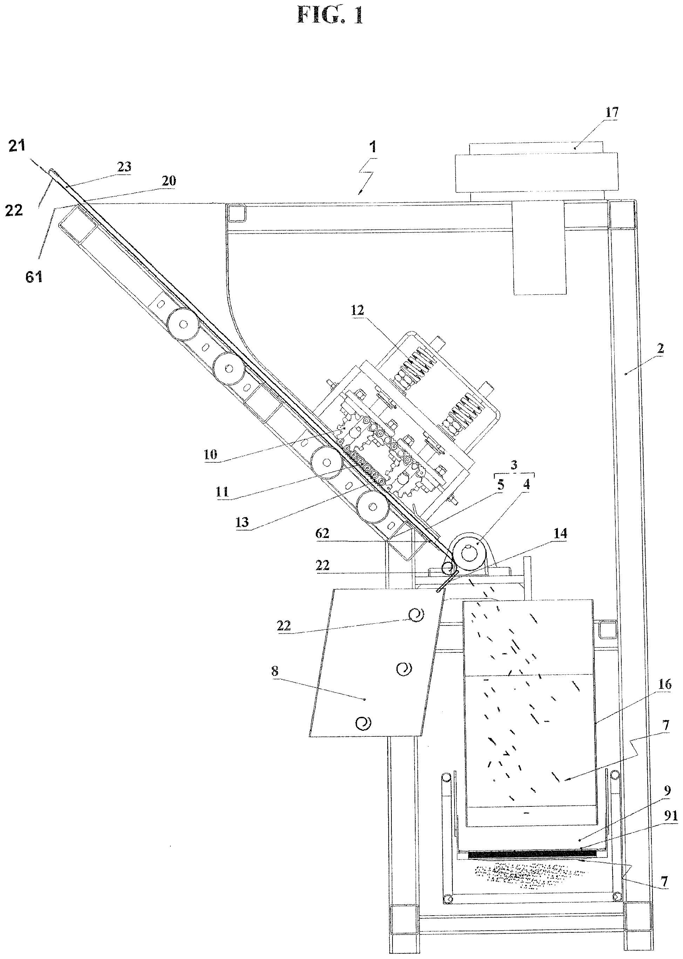

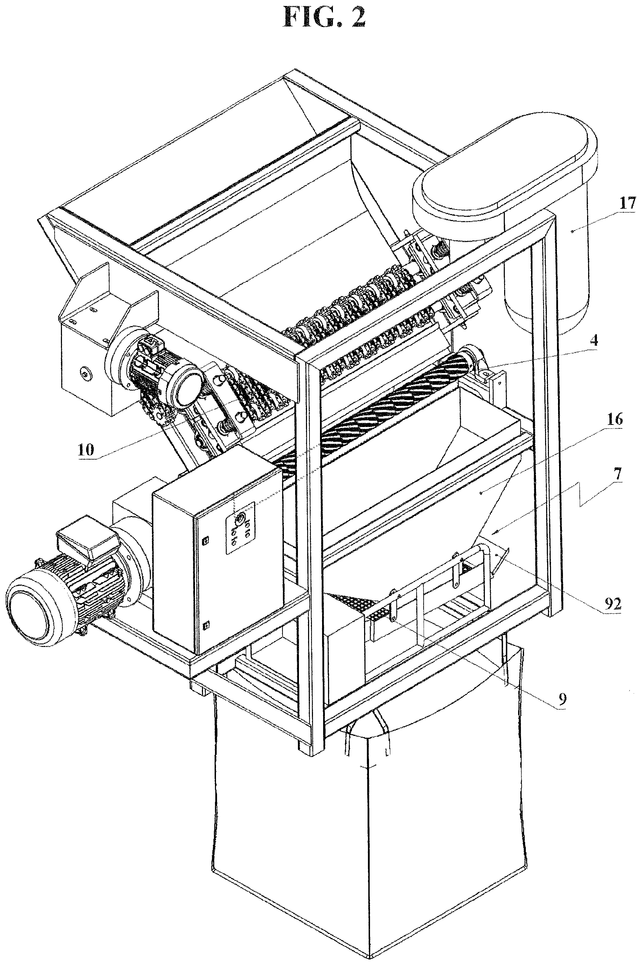

Pour la mise en oeuvre d'un tel procédé, une installation 1, conforme à celle représentée aux figures 1 et 2 ou 6 peut être utilisée. Cette installation 1 comprend un bâti support 2 formé essentiellement d'une structure mécanosoudée, délimitant les faces d'une enceinte, chaque face de l'enceinte étant apte à être fermée au moins partiellement par un ou plusieurs éléments de carter.

À l'intérieur de cette enceinte, sont logés au moins partiellement une raboteuse 3, un dispositif de tri et une zone 8 de collecte. Cette enceinte est équipée de moyens 17 d'aspiration comprenant des moyens de filtration pour permettre la rétention des poussières, notamment des poussières de l'âme du panneau à l'intérieur de ladite enceinte.

La raboteuse 3 comprend un organe 4 de coupe rotatif se présentant par exemple sous forme d'une fraise conforme à celle représentée aux figures 4 et 5. Cette fraise se présente sous forme d'un corps allongé rotatif, muni sur son pourtour, d'une alternance de rainures et de nervures hélicoïdales de manière en soi connue.

L'installation comprend encore un moteur d'entraînement en rotation dudit organe 4 rotatif de coupe.

La raboteuse 3 comprend également un chemin 5 de guidage du panneau 20 à raboter. Ce chemin 5 de guidage est muni d'une entrée 61 d'alimentation en panneau 20 et d'une sortie 62 d'évacuation, et est configuré pour permettre l'amenée du panneau 20 à raboter reposant par son premier parement 22 sur la surface 51 de réception de panneau du chemin 5 de guidage dans la zone active de coupe de l'organe 4 de coupe rotatif, en vue d'un rabotage du panneau 20 à partir du deuxième parement 23 du panneau.

Ce chemin 5 de guidage se présente ici sous forme d'une rampe montée sur le bâti support. Cette rampe est bordée longitudinalement de rives pour empêcher un panneau de glisser en dehors de la rampe. Cette rampe peut être surmontée d'une plaque, qui forme avec la rampe un entonnoir constituant l'entrée 61 d'alimentation en panneau 20 du chemin de guidage.

Dans l'exemple représenté, le chemin 5 de guidage est incliné depuis un point haut, éloigné de la zone active de coupe de l'organe rotatif de coupe, et qui forme l'entrée 61 d'alimentation en panneau 20 du chemin 5 de guidage en direction d'un point bas rapproché de la zone active de coupe de l'organe 4 rotatif de coupe, et qui forme la sortie 62 d'évacuation du chemin 5 de guidage.

La sortie 62 du chemin 5 de guidage est disposée au-dessous du plan diamétral dit horizontal parallèle au plan d'appui au sol de l'installation et passant par l'axe de rotation de l'organe 4 rotatif de coupe, à proximité du quart inférieur amont du cylindre constitutif de l'organe 4 rotatif de coupe pris dans le sens de déplacement du panneau, le long du chemin de guidage, depuis l'entrée vers la sortie dudit chemin de guidage.

Le chemin 5 de guidage est ainsi configuré pour permettre au premier parement du panneau 20 de tangenter la surface périphérique externe de coupe de l'organe 4 rotatif de coupe. Dans l'exemple représenté, le chemin 5 de guidage forme un angle voisin de 45° avec le plan d'appui au sol de l'installation.

Ce chemin 5 de guidage peut également être un chemin 5 de guidage horizontal parallèle au plan d'appui au sol de l'installation. Cette configuration n'est pas représentée.

Indépendamment de la configuration du chemin 5 de guidage, au moins une partie de la zone située en dessous de l'organe 4 de coupe rotatif est exempte de chemin 5 de guidage, pour faciliter la récupération des copeaux issus du rabotage. Idéalement, le chemin 5 de guidage s'interrompt donc avant d'atteindre le côté aval de l'organe rotatif de coupe. Dans l'exemple représenté, la sortie 62 d'évacuation du chemin 5 de guidage s'étend en amont de l'organe 4 de coupe, sensiblement à mi-hauteur de la distance séparant l'axe de rotation de l'organe 4 rotatif de coupe de la base dudit organe 4 rotatif de coupe.

L'organe 4 rotatif de coupe s'étend entre deux chapes. Il est fixé au bâti-support par vissage desdites chapes. Lesdites chapes sont équipées de lumières oblongues, et un ou plusieurs contre-écrous peuvent être ajoutés pour permettre à l'organe 4 rotatif de coupe d'être monté sur le bâti support 2 réglable en hauteur et suivant une direction transversale à l'axe de rotation de l'organe 4 de coupe rotatif, dans le sens d'un rapprochement ou d'un écartement de l'entrée 61 d'alimentation en panneau du chemin 5 de guidage. Il en résulte ainsi la possibilité de régler aisément l'épaisseur de panneau à raboter. Ces moyens de réglage sont représentés sous la référence générale 15 dans les figures.

Dans l'exemple représenté, la surface 51 de réception de panneau du chemin 5 de guidage qui s'étend dans un plan parallèle à l'axe de rotation de l'organe 4 de coupe rotatif est munie, de place en place, de rouleaux, montés libres à rotation, et d'axes de rotation parallèles à l'axe de rotation de l'organe 4 de coupe rotatif, pour faciliter un déplacement par glissement du panneau 20 sur la surface 51 de réception de panneau du chemin 5 de guidage.

L'installation comprend encore, pour augmenter le rendement de l'installation, des moyens 10 d'entrainement en déplacement du panneau 20 le long du chemin 5 de guidage depuis l'entrée 61 d'alimentation en panneau 20 en direction de la sortie 62 d'évacuation dudit chemin 5 de guidage suivant une direction transversale à l'axe de rotation de l'organe 4 de coupe rotatif. Ces moyens 10 d'entraînement en déplacement du panneau 20 le long du chemin 5 de guidage comprennent un organe 11 de transmission sans fin positionnable en regard de la surface 51 de réception de panneau 20 du chemin 5 de guidage, et des moyens 12 de pressage dudit organe 11 de transmission sans fin en direction de la surface 51 de réception de panneau du chemin 5 de guidage, pour une prise en sandwich de chaque panneau 20 entre l'organe 11 de transmission sans fin et la surface 51 de réception de panneau dudit chemin 5 de guidage.

Dans l'exemple représenté, l'organe 11 de transmission sans fin est une chaîne, délimitant une boucle fermée s'enroulant autour de deux rouleaux d'axes parallèles à l'axe de rotation de l'organe 4 rotatif de coupe. L'un des rouleaux est couplé à un moteur pour son entraînement en rotation. La chaîne suit donc ainsi une trajectoire en boucle sans fin autour d'un axe sensiblement parallèle à l'axe de rotation de l'organe 4 de coupe rotatif. Pour faciliter l'entraînement du panneau, l'organe 11 de transmission sans fin est muni, sur sa surface périphérique externe, d'éléments 13 en saillie, tels que des picots ou dents, aptes à venir en prise avec le deuxième parement 23 du panneau 20. Ainsi, les maillons de la chaîne sont munis chacun sur leur surface extérieure, de dents ou picots. Il doit être noté que dans les exemples représentés, la chaîne a été représentée de manière partielle, pour ne pas alourdir les représentations.

Les moyens 12 de pressage de l'ensemble rouleaux/chaîne sur le deuxième parement du panneau sont formés par des ressorts montés sur le bâti support et tendant à rappeler l'ensemble rouleaux/chaîne en direction de la surface de réception de panneau du chemin 5 de guidage.

Le chemin 5 de guidage est, dans sa zone en aval des moyens d'entraînement en déplacement du panneau, à nouveau surmonté d'une plaque empêchant un soulèvement du panneau.

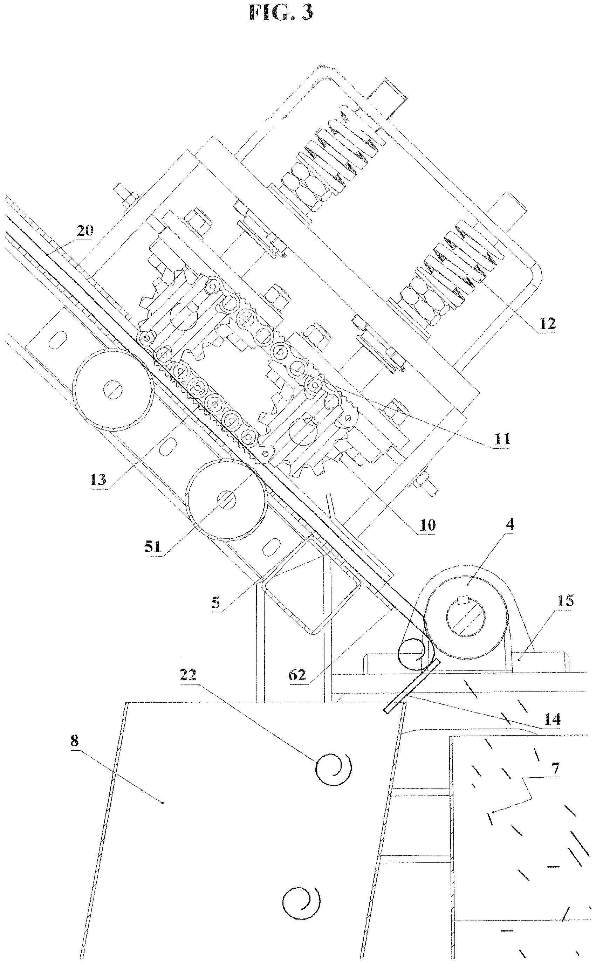

Au niveau de la sortie 62 d'évacuation du chemin 5 de guidage, le premier parement 22, libéré au moins partiellement de la présence de l'âme et du deuxième parement, tend à s'enrouler sous ledit chemin 5 de guidage, comme illustré à la figure 3. Lorsque l'ensemble du panneau est raboté, le premier parement du panneau tombe par gravité et est collecté dans une zone 8 de collecte disposée au moins partiellement sous et à l'aplomb de la sortie 62 d'évacuation du chemin 5 de guidage.

Cette zone de collecte peut comprendre un conteneur monté amovible sur le bâti support, pour permettre une vidange régulière dudit conteneur comme illustré aux figures 1 et 3.

Les copeaux issus du rabotage sont quant à eux projetés en direction du dispositif 7 de tri. Ce dispositif 7 de tri est disposé au moins partiellement à l'aplomb et sous l'organe 4 de coupe rotatif, en aval de la sortie 62 d'évacuation du chemin 5 de guidage pris dans le sens de circulation du panneau 20 le long du chemin 5 de guidage, depuis l'entrée 61 d'alimentation en panneau 20 en direction de la sortie 62 d'évacuation.

Ce dispositif de tri comprend au moins un crible 9 de réception des copeaux issus du rabotage, apte à permettre la séparation d'au moins une partie des copeaux les plus gros, aptes à, c'est-à-dire les plus susceptibles de, contenir du deuxième parement, du reste des copeaux.

Les mailles de la surface de criblage peuvent présenter une dimension comprise dans la plage 0,5 x 0,5 mm à 3 x 3 mm pour retenir, en surface du crible, les copeaux de dimension supérieure.

Dans l'exemple représenté aux figures, le crible 9 est un crible vibrant. En d'autres termes, la surface de criblage est équipée de moyens d'entraînement en déplacement, en particulier de moyens d'oscillation de ladite surface.

Ce crible 9 est en outre un crible autonettoyant, qui présente une surface 91 de criblage inclinée. Dans l'exemple représenté aux figures 1 à 3, le point bas de la surface 91 de criblage est équipé d'un guide 92 formé ici d'une rampe de sortie du contenu du dessus de la surface 91 de criblage, en direction d'un emplacement prédéterminé. Cet emplacement prédéterminé peut être équipé d'un conteneur de collecte des copeaux ainsi évacués de la surface de criblage. Ainsi, les copeaux ne s'accumulent pas au niveau du dessus de la surface de criblage, ce qui limite les opérations de maintenance.

Dans ce même mode de réalisation, un conteneur peut être disposé sous la surface de criblage, pour récupérer les copeaux issus du criblage, et formés essentiellement de copeaux à base d'âme du panneau.

Comme mentionné déjà ci-dessus, un conteneur peut être disposé sous l'extrémité libre du guide 92 de sortie, pour collecter les copeaux de plus grande dimension formés essentiellement du deuxième parement.

Dans ce mode de réalisation, pour aider à l'amenée des copeaux sur le crible, la surface 91 de criblage du crible est surmontée d'une trémie 16 disposée entre l'organe 4 de coupe rotatif et la surface 91 de criblage.

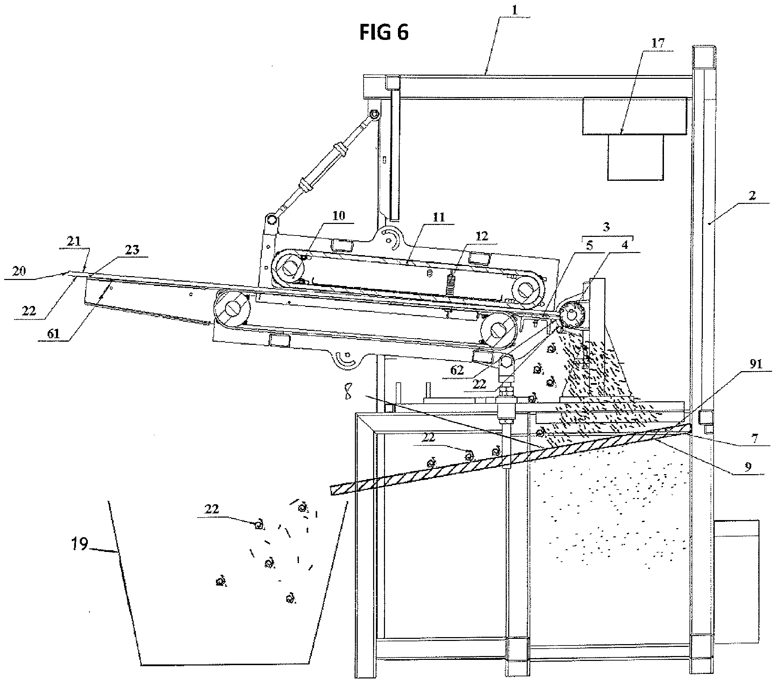

La figure 6 illustre un autre mode de réalisation de l'invention dans lequel seules les conceptions du dispositif 7 de tri et de la zone 8 de collecte sont légèrement modifiées par rapport au mode de réalisation des figures 1 à 3.

Dans l'exemple représenté à la figure 6, et de manière similaire aux figures 1 à 3, les copeaux issus du rabotage sont projetés en direction du dispositif 7 de tri. Ce dispositif 7 de tri est disposé au moins partiellement à l'aplomb et sous l'organe 4 de coupe rotatif, en aval de la sortie 62 d'évacuation du chemin 5 de guidage pris dans le sens de circulation du panneau 20 le long du chemin 5 de guidage, depuis l'entrée 61 d'alimentation en panneau 20 en direction de la sortie 62 d'évacuation.

Ce dispositif 7 de tri comprend au moins un crible 9 de réception des copeaux issus du rabotage, apte à permettre la séparation d'au moins une partie des copeaux les plus gros, aptes à, c'est-à-dire les plus susceptibles de, contenir du deuxième parement, du reste des copeaux.

Les mailles de la surface de criblage peuvent présenter une dimension comprise dans la plage 0,5 x 0,5 mm à 3 x 3 mm pour retenir, en surface du crible, les copeaux de dimension supérieure.

Dans l'exemple représenté aux figures, le crible 9 est un crible vibrant. En d'autres termes, la surface de criblage est équipée de moyens d'entraînement en déplacement, en particulier de moyens d'oscillation de ladite surface.

Ce crible 9 est en outre un crible autonettoyant, qui présente une surface 91 de criblage inclinée.

Dans ce mode de réalisation, le crible 9 du dispositif 7 de tri présente une surface 91 de criblage qui se prolonge en direction d'une zone s'étendant au moins partiellement sous, et à l'aplomb, du chemin 5 de guidage, pour former au moins une partie de la zone 8 de collecte du premier parement 22.

La surface 91 du crible 9 est inclinée depuis un point haut situé au niveau du dispositif 7 de tri en direction d'un point bas situé au niveau de la zone 8 de collecte.

Les ouvertures de la surface 91 de criblage du crible 9 disposée dans la zone qui s'étend au moins partiellement sous et à l'aplomb du chemin 5 de guidage pour former au moins une partie de la zone 8 de collecte du premier parement 22 sont dimensionnées pour retenir en surface du crible au moins une partie, de préférence la totalité des chutes de premier parement 22.

Le point bas de la surface 91 de criblage est positionné à l'aplomb et au-dessus d'un récipient 19 de réception du contenu du dessus de la surface 91 de criblage.

Ainsi, avec un tel aménagement, on récupère sous la surface 91 de criblage du crible 9 positionnée à la verticale de l'organe 4 de coupe rotatif les copeaux de plus petite dimension issus du criblage et formés essentiellement de copeaux à base d'âme du panneau. Les copeaux de plus grande dimension, c'est-à-dire les plus susceptibles de contenir du deuxième parement, sont quant à eux retenus en surface de la surface 91 de criblage du crible 9 et sont acheminés, du fait de l'inclinaison du crible 9 et du caractère vibrant du crible 9, en direction de la zone 8 de collecte qu'ils parcourent avant d'aboutir dans le récipient 19 disposé au-dessous et à l'aplomb du point bas de la surface 91 de criblage. Ces copeaux de grande dimension rejoignent, dans ce récipient 19, le premier parement. En effet, le premier parement, retenu également en surface de la surface de criblage au niveau de la surface de criblage ménagée dans la zone 8 de collecte, est acheminé à l'aide du crible incliné et vibrant dans le récipient 19. Au moment de la vidange de ce récipient 19, un tri peut être opéré ou non entre le premier parement et les copeaux de grande dimension selon la destinée de ces éléments.

Enfin, l'installation 1 peut comprendre en aval de la sortie 62 d'évacuation du chemin 5 de guidage pris dans le sens de circulation du panneau 20 le long du chemin 5 de guidage depuis l'entrée 61 d'alimentation en panneau en direction de la sortie 62 d'évacuation une plaque 14 déflectrice de guidage des copeaux en direction du dispositif 7 de tri. Dans l'exemple représenté à la figure 1, cette plaque 14 déflectrice forme une rampe inclinée depuis un point haut positionné au voisinage de la zone active de coupe, en direction d'un point bas positionné au niveau du dispositif de tri. Cette plaque 14 déflectrice sépare la zone de tri de la zone de collecte du premier parement.

Indépendamment du mode de réalisation de la zone de tri et du dispositif de collecte, l'approvisionnement en panneau de l'entrée du chemin 5 de guidage peut s'opérer de manière manuelle ou automatique à l'aide, par exemple, d'une bande transporteuse. De même, d'autres moyens d'entraînement en déplacement des panneaux, tels qu'une bande transporteuse peuvent être envisagés au niveau du chemin de guidage, sans sortir de l'invention.

Les chutes de panneau sont donc amenées dans le chemin de guidage, avant d'être rabotées en sortie du chemin de guidage, pour une collecte du premier parement, des copeaux de grande dimension, et des copeaux de plus petite dimension, avec les copeaux de plus petite dimension, séparés du premier parement et des copeaux de grande dimension les plus susceptibles de contenir du deuxième parement.

## Revendications

1. Procédé de traitement de panneau (20), ou plaque, formé d'une âme (21) et d'un premier (22) et d'un deuxième parements (23) prenant en sandwich l'âme (21),
**caractérisé en ce qu'**il comprend une étape de séparation au moins du premier parement (22) du reste du panneau (20) par contact d'appui d'au moins un organe (4) rotatif de coupe avec le panneau (20) côté deuxième parement (23) dudit panneau (20) en vue d'un rabotage dudit panneau (20), et **en ce que** l'étape de séparation est suivie en parallèle d'une part, d'une étape de tri par criblage des copeaux issus de l'action de l'organe (4) rotatif de coupe pour séparer les copeaux les plus gros aptes à contenir du deuxième parement (23) du reste des copeaux et d'autre part, d'une étape de collecte du premier parement (22).

2. Installation (1) de traitement de panneau (20), ou plaque, formé d'une âme (21) et d'un premier (22) et d'un deuxième parements (23) prenant en sandwich l'âme (21),
**caractérisée en ce qu'**elle comprend, disposés au moins partiellement sur un bâti support (2), une raboteuse (3), un dispositif (7) de tri, et une zone (8) de collecte, ladite raboteuse (3) comprenant un organe (4) de coupe rotatif et un chemin (5) de guidage du panneau (20) à raboter muni d'une entrée (61) d'alimentation en panneau (20) et d'une sortie (62) d'évacuation pour l'amenée dudit panneau (20) à raboter reposant par son premier parement (22) sur la surface (51) de réception de panneau du chemin (5) de guidage dans la zone active de coupe de l'organe (4) de coupe rotatif en vue d'un rabotage du panneau (20) à partir du deuxième parement (23) du panneau, la zone (8) de collecte étant disposée au moins partiellement sous et à l'aplomb de la sortie (62) d'évacuation du chemin (5) de guidage en vue de la collecte du premier parement (22), tandis que le dispositif (7) de tri est disposé au moins partiellement à l'aplomb et sous l'organe (4) de coupe rotatif, en aval de la sortie (62) d'évacuation du chemin (5) de guidage pris dans le sens de circulation du panneau (20) le long du chemin (5) de guidage depuis l'entrée (61) d'alimentation en panneau (20) en direction de la sortie (62) d'évacuation, ce dispositif (7) de tri comprenant au moins un crible (9) de réception des copeaux issus du rabotage.

3. Installation (1) selon la revendication 2,
**caractérisée en ce que** l'épaisseur du panneau (20) à raboter étant prédéterminée connue, le chemin (5) de guidage et l'organe (4) de coupe rotatif sont configurés pour permettre au moins un rabotage du panneau (20) sur une épaisseur égale à l'épaisseur du panneau moins l'épaisseur du premier parement (22) à plus ou moins 5 mm près.

4. Installation (1) selon l'une des revendications 2 ou 3,
**caractérisée en ce que** l'installation (1) comprend des moyens (10) d'entrainement en déplacement du panneau (20) le long du chemin (5) de guidage depuis l'entrée (61) d'alimentation en panneau (20) en direction de la sortie (62) d'évacuation dudit chemin (5) de guidage suivant une direction transversale à l'axe de rotation de l'organe (4) de coupe rotatif.

5. Installation (1) selon la revendication 4,
**caractérisée en ce que** les moyens (10) d'entrainement en déplacement du panneau (20) le long du chemin (5) de guidage comprennent un organe (11) de transmission sans fin positionnable en regard de la surface (51) de réception de panneau (20) du chemin (5) de guidage et des moyens (12) de pressage dudit organe (11) de transmission sans fin en direction de ladite surface (51) de réception de panneau du chemin (5) de guidage pour une prise en sandwich de chaque panneau (20) entre l'organe (11) de transmission sans fin et la surface (51) de réception de panneau dudit chemin (5) de guidage, ledit organe (11) de transmission sans fin, tel qu'une chaine ou une courroie, suivant une trajectoire en boucle autour d'un axe sensiblement paralllèle à l'axe de rotation de l'organe (4) de coupe rotatif.

6. Installation (1) selon la revendication 5,
**caractérisée en ce que** l'organe (11) de transmission sans fin est muni, sur sa surface périphérique externe, d'éléments (13) en saillie, tels que des picots ou dents, aptes à venir en prise avec le deuxième parement (23) du panneau (20).

7. Installation (1) selon l'une des revendications 2 à 6,
**caractérisée en ce que** la surface (51) de réception de panneau du chemin (5) de guidage s'étend dans un plan parallèle à l'axe de rotation de l'organe (4) rotatif de coupe.

8. Installation (1) selon l'une des revendications 2 à 7,
**caractérisée en ce que** l'installation (1) comprend, en aval de la sortie (62) d'évacuation du chemin (5) de guidage pris dans le sens de circulation du panneau (20) le long du chemin (5) de guidage depuis l'entrée (61) d'alimentation en panneau en direction de la sortie (62) d'évacuation, une plaque (14) déflectrice de guidage des copeaux en direction du dispositif (7) de tri.

9. Installation (1) selon l'une des revendications 2 à 8,
**caractérisée en ce que** l'organe (4) de coupe rotatif est monté sur le bâti support (2) réglable en hauteur et suivant une direction transversale à l'axe de rotation de l'organe (4) de coupe rotatif dans le sens d'un rapprochement ou d'un écartement de l'entrée (61) d'alimentation en panneau du chemin (5) de guidage.

10. Installation (1) selon l'une des revendications 2 à 9,
**caractérisée en ce que** le crible (9) est un crible vibrant.

11. Installation (1) selon l'une des revendications 2 à 10,
**caractérisée en ce que** le crible (9) dit autonettoyant présente une surface (91) de criblage inclinée.

12. Installation (1) selon l'une des revendications 1 à 11,
**caractérisée en ce que** le crible (9) du dispositif (7) de tri présente unesurface (91) de criblage qui se prolonge en direction d'une zone s'étendant au moins partiellement sous, et à l'aplomb, du chemin (5) de guidage, pour former au moins une partie de la zone (8) de collecte du premier parement (22).

13. Installation (1) selon la revendication 12,
**caractérisée en ce que** les ouvertures de la surface (91) de criblage du crible (9) disposée dans la zone qui s'étend au moins partiellement sous et à l'aplomb du chemin (5) de guidage pour former au moins une partie de la zone (8) de collecte du premier parement (22) sont dimensionnées pour retenir en surface du crible au moins une partie, de préférence la totalité des chutes de premier parement (22).

14. Installation (1) selon l'une des revendications 12 ou 13 prise en combinaison avec la revendication 11,
**caractérisée en ce que** le point bas de la surface (91) de criblage est positionné à l'aplomb et au-dessus d'un récipient (19) de réception du contenu du dessus de la surface (91) de criblage.

15. Installation (1) selon l'une des revendications 2 à 12,
**caractérisée en ce que** la surface (91) de criblage du crible (9) est surmontée d'une trémie (16) disposée entre l'organe (4) de coupe rotatif et la surface (91) de criblage.

## Patentansprüche

1. Verfahren zur Behandlung von Platten (20), gebildet aus einem Kern (21) und einer ersten (22) und einer zweiten Vorderseite (23), zwischen denen der Kern (21) angeordnet ist,
**dadurch gekennzeichnet, dass** es einen Schritt des Trennens mindestens der ersten Vorderseite (22) vom Rest der Platte (20) durch Auflagekontakt von mindestens einem drehenden Schneideorgan (4) mit der Platte (20) auf der Seite der zweiten Vorderseite (23) der Platte (20) angesichts eines Hobelns der Platte (20) umfasst, und dadurch, dass dem Schritt des Trennens einerseits parallel ein Schritt des Sortierens durch Sieben der Späne, die aus dem Betrieb des drehenden Schneideorgans (4) stammen, folgt, um die größten Späne, die geeignet sind, die zweite Vorderseite (23) vom Rest der Späne zu trennen, und andererseits einen Schritt des Sammelns der ersten Vorderseite (22) enthalten.

2. Anlage (1) zur Behandlung von Platten (20), gebildet aus einem Kern (21) und einer ersten (22) und einer zweiten Vorderseite (23), zwischen denen der Kern (21) angeordnet ist,
**dadurch gekennzeichnet, dass** sie, mindestens teilweise angeordnet auf einem Stützrahmen (2), eine Hobelmaschine (3), eine Siebvorrichtung (7) und einen Sammelbereich (8) umfasst, wobei die Hobelmaschine (3) ein drehendes Schneideorgan (4) und einen Weg (5) zur Führung der zu hobelnden Platte (20), ausgestattet mit einem Eingang (61) zur Versorgung mit Platten (20) und einen Ausgang (62) zur Entfernung, umfasst, um die zu hobelnde Platte (20) zuzuführen, die mit ihrer ersten Vorderseite (22) auf der Oberfläche (51) zur Aufnahme der Platte vom Weg zur Führung (5) im aktiven Bereich des drehenden Schneideorgans (4) angesichts eines Hobelns der Platte (20) ausgehend von der zweiten Vorderseite (23) der Platte aufliegt, wobei der Sammelbereich (8) mindestens teilweise unter dem und senkrecht zum Ausgang zur Entfernung des Führungswegs (5) angesichts der Sammlung der ersten Vorderseite (22) angeordnet ist, während die Sortiervorrichtung (7) mindestens teilweise senkrecht zu und unter dem drehenden Schneideorgan (4) nachgeordnet vom Ausgang (62) zur Entfernung des Führungswegs (5) angeordnet ist, gesehen in der Richtung der Zirkulierung der Platte (20) entlang des Führungswegs (5) vom Eingang (61) zur Versorgung mit Platten (20) in Richtung des Ausgangs (62) zur Entfernung, wobei diese Sortiervorrichtung (7) mindestens ein Sieb (9) zur Aufnahme der Späne umfasst, die vom Hobeln stammen.

3. Anlage (1) nach Anspruch 2, **dadurch gekennzeichnet, dass**, da die Dicke der zu hobelnden Platte (20) im Voraus bekannt ist, der Führungsweg (5) und das drehende Schneideorgan (4) konfiguriert sind, um mindestens ein Hobeln der Platte (20) auf einer Dicke zu ermöglichen, die gleich der Dicke der Platte minus der Dicke der ersten Vorderseite (22) mit einer Genauigkeit von mehr oder weniger 5 mm ist.

4. Anlage (1) nach einem der Ansprüche 2 oder 3, **dadurch gekennzeichnet, dass** die Anlage (1) Mittel (10) zur Verschiebung der Platte (20) entlang des Führungswegs (5) vom Eingang (61) zur Versorgung mit Platten (20) in Richtung des Ausgangs (62) zur Entfernung des Führungswegs (5) gemäß einer Querrichtung zur Drehachse des drehenden Schneideorgans (4) umfasst.

5. Anlage (1) nach Anspruch 4,
**dadurch gekennzeichnet, dass** die Mittel (10) zur Verschiebung der Platte (20) entlang des Führungswegs (5) ein Organ zur Endlosübertragung (11), das gegenüber der Oberfläche (51) zur Aufnahme der Platte (20) vom Führungsweg (5) positioniert werden kann, und Mittel (12) zum Drücken des Organs zur Endlosübertragung (11) in Richtung der Oberfläche (51) zur Aufnahme der Platte vom Führungsweg (5) für eine Anordnung jeder Platte (20) zwischen dem Organ zur Endlosübertragung (11) und der Oberfläche (51) zur Aufnahme der Platte von dem Führungsweg (5) umfasst, wobei das Organ zur Endlosübertragung (11), wie z. B. eine Kette oder ein Riemen, einem Schleifenweg um eine Achse folgt, die im Wesentlichen parallel zur Drehachse des drehenden Schneideorgans (4) ist.

6. Anlage (1) nach Anspruch 5,
**dadurch gekennzeichnet, dass** das Organ zur Endlosübertragung (11) auf seiner externen Umfangsfläche mit vorspringenden Elementen (13) ausgestattet ist, wie z. B. Zacken oder Zähnen, die geeignet sind, um mit der zweiten Vorderseite (23) der Platte (20) einzugreifen.

7. Anlage (1) nach einem der Ansprüche 2 bis 6,
**dadurch gekennzeichnet, dass** sich die Oberfläche (51) zur Aufnahme der Platte vom Führungsweg (5) in einer Ebene parallel zu Drehachse des drehenden Schneideorgans (4) erstreckt.

8. Anlage (1) nach einem der Ansprüche 2 bis 7,
**dadurch gekennzeichnet, dass** die Anlage (1), nachgeordnet vom Ausgang (62) zur Entfernung des Führungswegs (5), gesehen in der Richtung der Zirkulierung der Platte (20) entlang des Führungswegs (5) vom Eingang (61) zur Versorgung mit Platten in Richtung des Ausgangs (62) zur Entfernung, eine Umleitungsplatte (14) zur Führung der Späne in Richtung der Siebvorrichtung (7) umfasst.

9. Anlage (1) nach einem der Ansprüche 2 bis 8,
**dadurch gekennzeichnet, dass** das drehende Schneideorgan (4) auf dem Tragerahmen (2) montiert ist, der einstellbar in der Höhe und gemäß einer Querrichtung zur Drehachse des drehenden Schneideorgans (4) in der Richtung einer Annäherung oder einer Beabstandung des Eingangs (61) zur Versorgung mit Platten des Führungswegs (5) montiert ist.

10. Anlage (1) nach einem der Ansprüche 2 bis 9,
**dadurch gekennzeichnet, dass** das Sieb (9) ein vibrierendes Sieb ist.

11. Anlage (1) nach einem der Ansprüche 2 bis 10,
**dadurch gekennzeichnet, dass** das als selbstreinigend bezeichnete Sieb (9) eine geneigte Siebfläche (91) aufweist.

12. Anlage (1) nach einem der Ansprüche 1 bis 11,
**dadurch gekennzeichnet, dass** das Sieb (9) der Sortiervorrichtung (7) eine Siebfläche (91) aufweist, die in Richtung eines Bereichs verlängert ist, der sich mindestens teilweise unter dem und senkrecht zum Führungweg (5) erstreckt, um mindestens einen Teil des Sammelbereichs (8) der ersten Vorderseite (22) zu bilden.

13. Anlage (1) nach Anspruch 12,
**dadurch gekennzeichnet, dass** die Öffnungen der Siebfläche (91) des Siebs (9), die im Bereich angeordnet sind, der sich mindestens teilweise unter dem und senkrecht zum Führungsweg (5) erstreckt, um mindestens einen Teil des Sammelbereichs (8) der ersten Vorderseite (22) zu bilden, abgemessen sind, um auf der Oberfläche des Siebs mindestens einen Teil, vorzugsweise die Gesamtheit der Abfälle der ersten Verkleidung (22) zurückzuhalten.

14. Anlage (1) nach einem der Ansprüche 12 oder 13 in Kombination mit Anspruch 11,
**dadurch gekennzeichnet, dass** der unterste Punkt der Siebfläche (91) senkrecht zu und unter einem Behälter (19) zur Aufnahme des Inhalts der Unterseite der Siebfläche (91) positioniert ist.

15. Anlage (1) nach einem der Ansprüche 2 bis 12,
**dadurch gekennzeichnet, dass** die Siebfläche (91) des Siebs (9) von einem Trichter überragt (16) wird, der zwischen dem drehenden Schneideorgan (4) und der Siebfläche (91) angeordnet ist.

## Claims

1. A method for the treatment of boards (20), or panels, made up of a core (21) and first (22) and second (23) faces sandwiching the core (21),
**characterized in that** it includes a step for separating at least the first face (22) from the rest of the board (20) by bearing contact of at least one rotary cutting member (4) with the board (20) on the side of the second face (23) of said board (20) for planning of said board (20), and **in that** the separating step is followed in parallel, on the one hand, by a step for sorting by screening of the shavings resulting from the action of the rotary cutting member (4) in order to separating the largest shavings that may contain the second face (23) from the rest of the shavings, and on the other hand, a step for collecting the first face (22).

2. A device (1) for treating boards (20), or panels, made up of a core (21) and first (22) and second (23) faces sandwiching the core (21),
**characterized in that** it includes, positioned at least partially on a support frame (2), a planer (3), a sorting device (7), and a collection zone (8), said planer (3) including a rotary cutting member (4) and a guide path (5) for the board (20) to be planed (20) provided with a supply inlet (61) for boards (20) and an discharge outlet (62) for bringing said board (20) to be planed resting by its first face (22) on the board receiving surface (51) of the guide path (5) in the active cutting zone of the rotary cutting member (4) for planning of the board (20) from the second face (23) of the board, the collection zone (8) being positioned at least partially below and plumb with the discharge outlet (62) of the guide path (5) in order to collect the first face (22), while the sorting device (7) is positioned at least partially plumb with and below the rotary cutting member (4), downstream from the discharge outlet (62) of the guide path (5) considered in the circulation direction of the board (20) along the guide path (5) from the supply inlet (61) with boards (20) toward the discharge outlet (62), said sorting device (7) including at least one screen (9) for receiving shavings from the planning.

3. The device (1) according to claim 2,
**characterized in that** the thickness of the board (20) to be planed being known in advance, the guide path (5) and the rotary cutting member (4) are configured to allow at least one planning of the board (20) over a thickness equal to the thickness of the board minus the thickness of the first face (22) to within plus or minus 5 mm.

4. The device (1) according to one of claims 2 or 3,
**characterized in that** the device (1) includes means (10) for driving the movement of the board (20) along the guide path (5) from the supply inlet (61) for boards (20) toward the discharge outlet (62) of said guide path (5) along a direction transverse to the rotation axis of the rotary cutting member (4).

5. The device (1) according to claim 4,
**characterized in that** the means (10) for driving the movement of the board (20) along the guide path (5) include an endless transmission member (11) able to be positioned across from the board (20) receiving surface (51) of the guide path (5) and means (12) for pressing said endless transmission member (11) toward said board receiving surface (51) of the guide path (5) in order to sandwich each board (20) between the endless transmission member (11) and the board receiving surface (51) of said guide path (5), said endless transmission member (11), such as a chain or a belt, following a loop trajectory around an axis substantially parallel to the rotation axis of the rotary cutting member (4).

6. The device (1) according to claim 5,
**characterized in that** the endless transmission member (11) is provided, on its outer peripheral surface, with protruding elements (13), such as spurs or teeth, able to engage with the second face (23) of the board (20).

7. The device (1) according to one of claims 2 to 6,
**characterized in that** the board receiving surface (51) of the guide path (5) extends in a plane parallel to the rotation axis of the rotary cutting member (4).

8. The device (1) according to one of claims 2 to 7,
**characterized in that** the device (1) includes, downstream from the discharge outlet (62) of the guide path (5) considered in the circulation direction of the board (20) along the guide path (5) from the board supply inlet (61) toward the discharge outlet (62), a guide deflector panel (14) for the shavings toward the sorting device (7).

9. The device (1) according to one of claims 2 to 8,
**characterized in that** the rotary cutting member (4) is mounted on the support frame (2) height-adjustably and along a direction transverse to the rotation axis of the rotary cutting member (4) in the direction coming closer to or moving further from the board supply inlet (61) of the guide path (5).

10. The device (1) according to one of claims 2 to 9,
**characterized in that** the screen (9) is a vibrating screen.

11. The device (1) according to one of claims 2 to 10,
**characterized in that** the screen (9), said to be self-cleaning, has a tilted screening surface (91).

12. The device (1) according to one of claims 1 to 11,
**characterized in that** the screen (9) of the sorting device (7) has a screening surface (91) that extends toward a zone extending at least partially below, and plumb with, the guide path (5), to form at least part of the collection zone (8) of the first face (22).

13. The device (1) according to claim 12,
**characterized in that** the openings of the screening surface (91) of the screen (9) positioned in the zone that extends at least partially below and plumb with the guide path (5) to form at least part of the collection zone (8) of the first face (22) are sized to retain, on the surface of the screen, at least part, preferably all, of the scraps from the first face (22).

14. The device (1) according to one of claims 12 or 13 combined with claim 11,
**characterized in that** the low point of the screening surface (91) is positioned plumb with and above a container (19) receiving the content from the top of the screening surface (91).

15. The device (1) according to one of claims 2 to 12,
**characterized in that** the screening surface (91) of the screen (9) is topped by a hopper (16) positioned between the rotary cutting member (4) and the screening surface (91).
